# EUROPEAN PATENT APPLICATION

(11) **EP 4 397 583 A1**
(43) Date of publication of application: **10.07.2024**
(21) Application number: 22864643.6
(22) Date of filing: 31.08.2022
(51) Int. Cl.: B62M 6/45, B62J 45/00, B60K 1/00

(54) **VEHICLE**

(30) Priority: 01.09.2021 JP 2021142751
(71) Applicant: HONDA MOTOR CO., LTD., Minato-ku Tokyo 107-8556 (JP)
(72) Inventor: ONUKI Hirotaka, Wako-shi, Saitama 351-0193 (JP); NOMURA Naoki, Wako-shi, Saitama 351-0193 (JP); HATTORI Makoto, Wako-shi, Saitama 351-0193 (JP); SUNAMOTO Masayuki, Wako-shi, Saitama 351-0193 (JP)
(74) Representative: Weickmann & Weickmann PartmbB
(86) International application number: PCT/JP2022/032822
(87) International publication number: WO 2023/033061

(57) **Abstract**

An electric bicycle (10) according to the present invention comprises: a rear wheel (78); a power unit which drives the rear wheel (78); a battery unit (4) electrically connected to the power unit (20); and a control circuit (40) which calculates an instruction value or a required value correlated to the power generated from the power unit (20). The power unit (20) and the battery unit (4) are disposed to be spaced apart from each other, and the control circuit (40) is spaced apart from the power unit (20) and is disposed inside the battery unit (4) or adjacent to the battery unit (4).

## Description

### TECHNICAL FIELD

The present invention relates to a vehicle equipped with an electric motor and a power storage device.

### BACKGROUND ART

As a vehicle equipped with an electric motor and a power storage device, an electric power assist bicycle is known in which a force of pressing a crank pedal is assisted by power of the electric motor (for example, Patent Literature 1). For electric power assist bicycles, an upper limit of an assist force and an upper limit of an assist ratio relative to a vehicle speed are stipulated by legal regulations. For example, Japanese legal regulations stipulate as follows.

"In cases where the bicycle is to be ridden at a speed less than 24 kilometers per hour, the ratio of the power that supplements human power using a motor to human power shall be equal to or less than the value specified in (1) or (2), respectively, depending on the speed category listed in (1) or (2).
(1) Speed less than 10 kilometers per hour: 2
(2) Speed of 10 kilometers per hour or more and less than 24 kilometers per hour: The value obtained by subtracting 10 from the value expressing the traveling speed in kilometers per hour, divided by 7, and subtracting the value from 2"

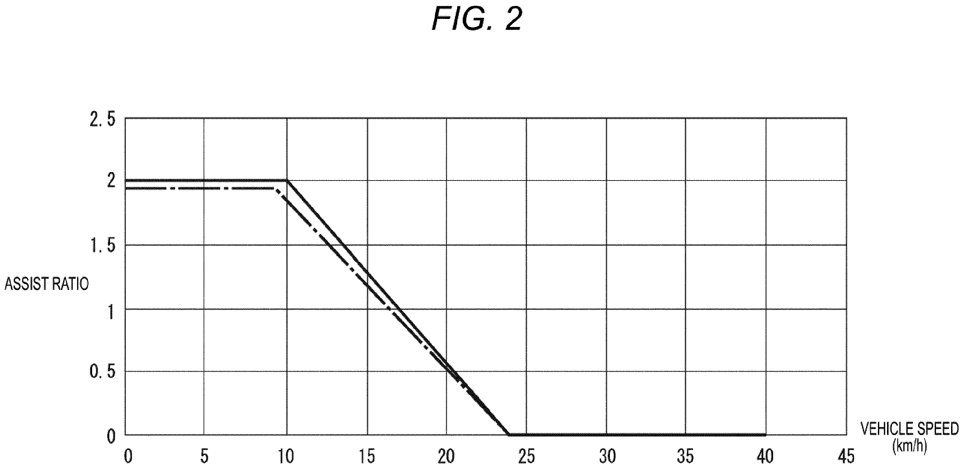

In other words, according to Japanese legal regulations, as the upper limit of the assist ratio relative to a vehicle speed as shown by the solid line in Fig. 2, the upper limit of the assist ratio is 2 when the vehicle speed is up to 10 km/h, and the assist ratio is required to gradually decrease from 2 to 0 when the vehicle speed is from 10 km/h to 24 km/h.

While electric power assist bicycles are generally sold as completed bicycles, there are also electric assist units that can be retrofitted to existing bicycle frames. For example, Patent Literature 2 describes an electric assist unit that can be retrofitted to an existing bicycle frame without making any major design changes.

### CITATION LIST

### PATENT LITERATURE

Patent Literature 1: JPH11-005583A
Patent Literature 2: JP2001-039377A

### SUMMARY OF INVENTION

### TECHNICAL PROBLEM

In electric power assist bicycles of the related art, an arithmetic device that calculates torque generated by an electric motor was disposed in a case that accommodates the electric motor. However, there is a desire to order an electric motor and an arithmetic device from different manufacturers and install the parts on a bicycle. When an arithmetic device is disposed in the same case in addition to a large electric motor, it may not be possible to install the arithmetic device depending on the vehicle type.

The present invention provides a vehicle that can handle an electric motor and an arithmetic device separately.

### SOLUTION TO PROBLEM

The present invention provides a vehicle that includes
a wheel,
an electric motor that drives the wheel,
a power storage device electrically connected to the electric motor, and
an arithmetic device that calculates a command value or a request value that correlates to power generated from the electric motor, in which
the electric motor and the power storage device are disposed apart from each other, and
the arithmetic device is disposed inside the power storage device or adjacent to the power storage device while being apart from the electric motor.

### ADVANTAGEOUS EFFECTS OF INVENTION

According to the present invention, the electric motor and the arithmetic device can be handled separately, and electric motors can be supplied from a plurality of manufacturers.

### BRIEF DESCRIPTION OF DRAWINGS

Fig. 1 is a diagram illustrating a correlation between parties involved in manufacturing or the like of an electric bicycle according to an embodiment of the present invention.
Fig. 2 is a graph illustrating a relationship between an assist ratio and vehicle speed of an electric power assist bicycle.
Fig. 3 is a side view of an electric bicycle 10.
Fig. 4 is a schematic diagram of a power transmission mechanism T including a power unit 20.
Fig. 5 is a diagram illustrating electrical paths and communication paths of the power unit 20, a battery 2, and a control circuit 40 in the electric bicycle 10.
Fig. 6 is a side view of a battery unit 4.
Fig. 7 is a cross-sectional view of a pedestal 3 of a first embodiment of the battery unit 4.
Fig. 8 is a perspective view of a first space SP1 of the pedestal 3 of the first embodiment.
Fig. 9 is a cross-sectional view taken along a P plane of Fig. 8.
Fig. 10 is a bottom view of a pedestal body viewed from a direction of an arrow Q in Fig. 9.
Fig. 11 is a plan view of an upper case 36 of the pedestal 3.
Fig. 12 is a perspective view of a first space SP1 of a pedestal 3 of a second embodiment.
Fig. 13 is a cross-sectional view of the pedestal 3 of the second embodiment.
Fig. 14 is a bottom view of a pedestal body as seen from a second space SP2 side.

### DESCRIPTION OF EMBODIMENTS

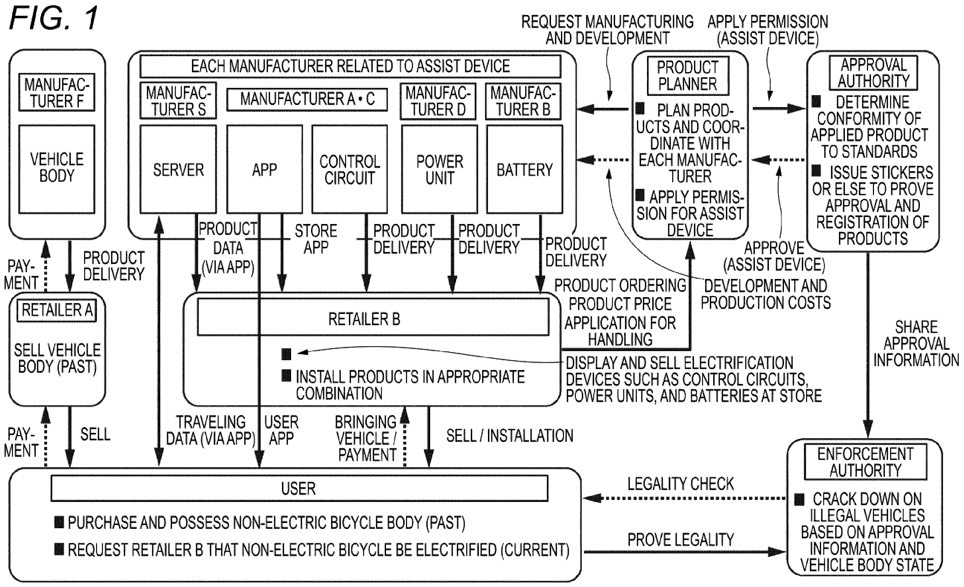

An electric bicycle will be described below as an example of a vehicle of the present invention. First, with reference to Fig. 1, a correlation between parties involved in manufacture of electric bicycles will be described. Fig. 1 assumes that a user who purchased a non-electric bicycle will retrofit the bicycle with an electric assist unit.

### <Correlation between Parties>

Parties involved in manufacture of electric bicycles or the like include a plurality of manufacturers S, A, C, D, and B who manufacture parts for electric assist units or the like, a manufacturer F who manufactures a vehicle body of a non-electric bicycle to which an electric assist unit is attached, a retailer A who sells the vehicle body of the non-electric bicycle, a user (hereinafter also referred to as a user) who purchases the non-electric bicycle from the retailer A, a retailer B who attaches an electric assist unit on the non-electric bicycle in response to a request from the user, a product planner who plans the product of the electric assist unit and coordinates the manufacturers S, A, C, D, and B, an approval authority that determines the conformity of electric assist units to standards, and an enforcement authority that cracks down on illegal vehicles. The correlation between the parties is merely an example, and there may be other parties involved. At least some of the plurality of manufacturers S, A, C, D, and B (in the following description, may be referred to as manufacturers or the like) may be integrated. Manufacturers, users, and product planners may be individuals or corporations, or may be non-corporate associations, foundations, voluntary organizations, and the like.

The manufacturer F delivers a vehicle body of a non-electric bicycle to the retailer A and receives payment. The retailer A sells the vehicle body of the non-electric bicycle to the user and receives payment.

The user is a person who purchased and possessed a non-electric bicycle (a non-electric bicycle body) from the retailer A and who wishes to electrify the non-electric bicycle. The user brings the vehicle body of the non-electric bicycle to the retailer B and requests that the non-electric bicycle be electrified. The user pays the price to the retailer B.

The product planner requests the manufacturers S, A, C, D, and B to manufacture and develop various devices, and pays development and production costs.

The manufacturer S develops, manufactures, and owns a server. The server collects and stores information on electric bicycles, and performs necessary processing. The server communicates with a control circuit of the electric bicycle or a mobile terminal of the user via a user application to exchange traveling data, or the like. The server communicates with a computer at the retailer B via a store application to exchange traveling data and the like. The server may be a distributed server composed of a plurality of server devices or a distributed virtual server (cloud server) created in a cloud environment.

The manufacturer A develops an application (application software) to easily manage electric bicycles, provides users with the user application, and provides the retailer B with the store application.

The manufacturer C develops and manufactures a control circuit with a built-in control program, and delivers the control circuit to the retailer B. The manufacturer D develops and manufactures a power unit (POWER UNIT in Fig. 1) and delivers the power unit to the retailer B.

The manufacturer B develops and manufactures batteries, and delivers the batteries to the retailer B. The manufacturer B may develop and manufacture a battery and a pedestal to which the battery is attached (hereinafter, the battery and pedestal will be collectively referred to as a battery unit), and may deliver the battery unit to the retailer B.

The retailer B displays and sells electric assist units, control circuits, and batteries at a store, and installs the electric assist units, control circuits, and batteries in appropriate combinations on non-electric bicycles brought in. The retailer B attaches electric assist units and the like to non-electric bicycles and then sells the electric bicycles to users.

The product planner requests the manufacturers S, A, C, D, and B to manufacture and develop various devices, and also applies for permission for the assist device to the approval authority. The approval authority determines the conformity of the applied assist device to the standards and issues a sticker or the like as proof to the approved and registered product. The approval authority shares approval information with the enforcement authority.

The enforcement authority is, for example, the police, and cracks down on illegal vehicles based on the approval information provided by the approval authority and the state of the electric bicycle.

### <Legal Regulations>

Here, legal regulations imposed on electric bicycles in Japan will be described.

According to Japanese legal regulations, as illustrated by the solid line in Fig. 2, an upper limit of an assist ratio is 2 when vehicle speed is up to 10 [km/h], and it is necessary to gradually reduce the assist ratio from 2 to 0 when the vehicle speed is from 10 [km/h] to 24 [km/h]. Therefore, for example, as illustrated in Fig. 2, the control circuit manufactured by the manufacturer C is programmed to achieve the assist ratio shown by the dashed-dotted line to not exceed the Japanese legal regulations (solid line). In an example shown by the dashed-dotted line in Fig. 2, it is set so that a predetermined margin is secured with respect to the upper limit of the assist ratio in a range of less than 10 [km/h] and a range of 10 [km/h] to 24 [km/h].

### <Control Program>

Unlike a completed bicycle in which an assist device is pre-installed, when the assist device is retrofitted, there are many types of vehicle bodies of bicycles to which the assist devices can be attached. Since vehicle body resistance (transmission loss) of a bicycle differs depending on the type, the program built into the control circuit needs to set an appropriate margin. When the margin is not appropriate, a city cycle with a large vehicle body resistance may be compliant with the legal regulations, whereas a sports cycle with a low vehicle body resistance may be non-compliant with the legal regulations. Therefore, the program of the control circuit is preferably initially set based on a bicycle with a small vehicle body resistance value, and may be initially set assuming a bicycle with a minimum loss. When the margin is excessively large, an actual assist ratio will becomes small. Therefore, it is preferable that the retailer B performs fitting by adding an optimization coefficient (correction value) to the program considering a safety factor for each type of the vehicle. The retailer B may perform detailed fitting for each vehicle type without using optimization coefficients (correction values).

### <Vehicle Structure>

Next, an example of an electric bicycle equipped with a power unit will be described.

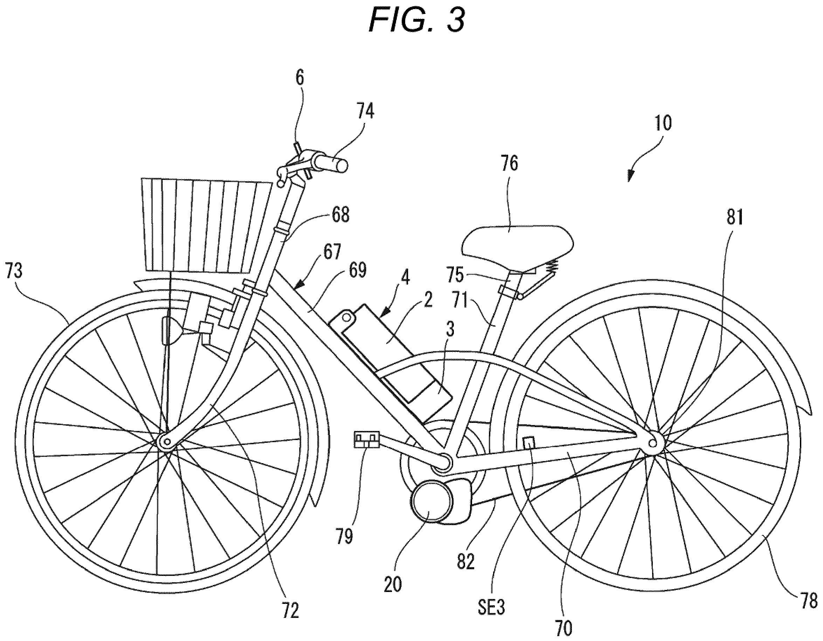

As illustrated in Fig. 3, an electric bicycle 10 is an electric power assist bicycle including a front wheel 73, a rear wheel 78, a bicycle frame 67, a power unit 20 that drives the rear wheel 78, and a battery unit 4 electrically connected to the power unit 20, and configured to be able to output assist force generated by the power unit 20.

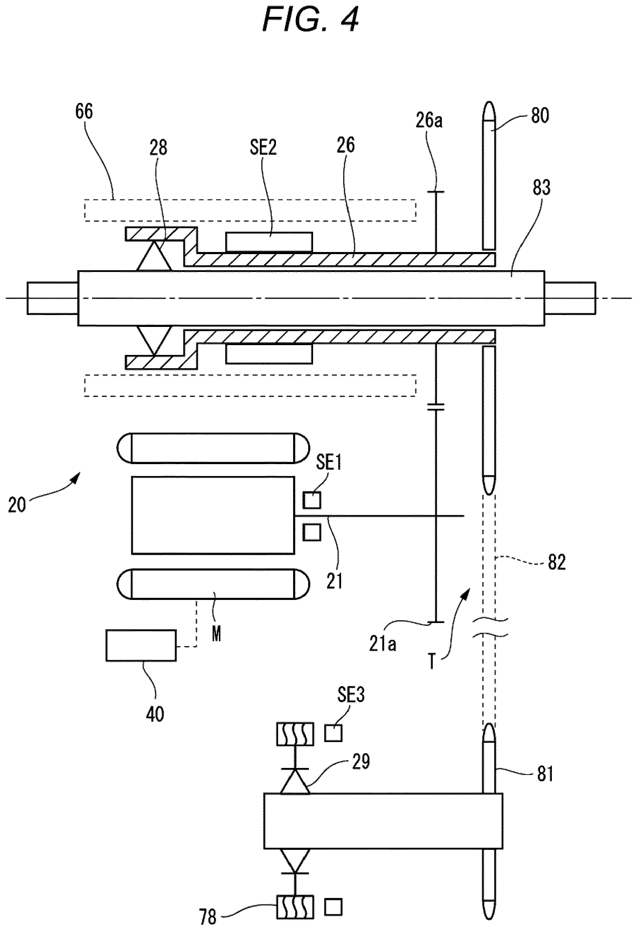

The bicycle frame 67 includes a head pipe 68 at a front end, a down pipe 69 extending rearward and downward from the head pipe 68 from a front of a vehicle body to the rear, a support pipe 66 (see Fig. 4) fixed to a rear end of the down pipe 69 and extending from side to side, a seat post 71 rising upward from the support pipe 66, and a pair of left and right rear forks 70 extending rearward from the support pipe 66.

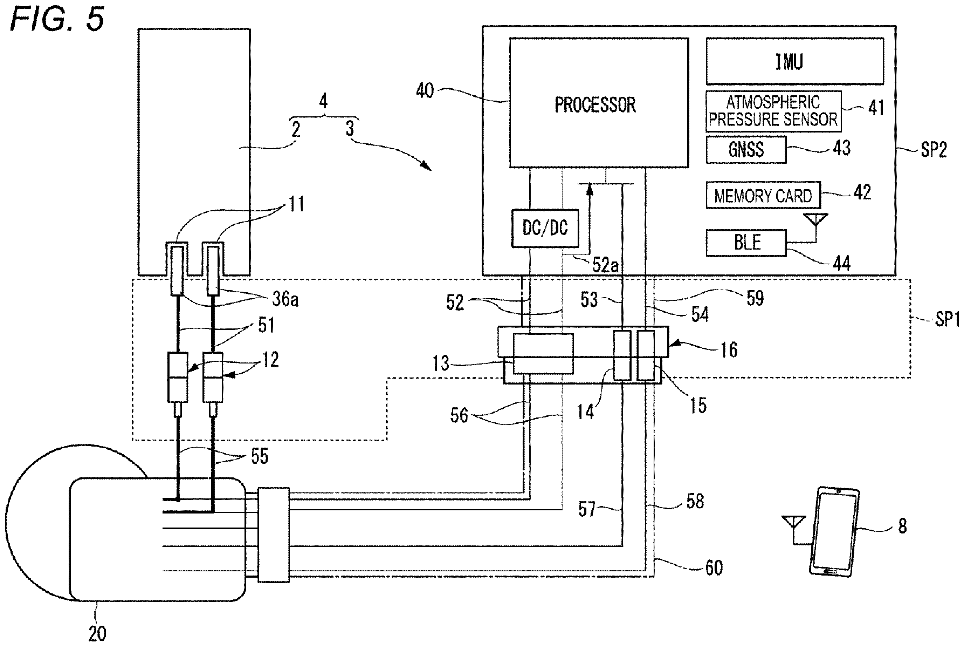

A front fork 72 is steerably supported by the head pipe 68, and the front wheel 73 is pivotally supported at a lower end of the front fork 72. A steering handle bar 74 is provided at an upper end of the front fork 72. The steering handle bar 74 is provided with a mobile terminal holder 6 that holds a mobile terminal 8 (see Fig. 5) owned by a user. The mobile terminal holder 6 is not essential, and the user's mobile terminal 8 may be attached to (accommodated in) the users themselves or something they wear (clothes, bag). The rear wheel 78 serving as a driving wheel is pivotally supported between rear ends of a pair of left and right rear forks 70 extending rearward from the seat post 71. A support shaft 75 provided with a seat 76 at the upper end is attached to the seat post 71 so that a vertical position of the seat 76 can be adjusted.

The battery unit 4 that supplies power to the power unit 20 is detachably fixed to the down pipe 69. More specifically, the battery unit 4 includes a pedestal 3 attached to an upper surface of the down pipe 69, and a battery 2 is detachably held on the pedestal 3. Details of the battery unit 4 will be described below.

A pair of crank pedals 79 are respectively connected to left and right ends of a crankshaft 83 that coaxially passes through the support pipe 66 of the bicycle frame 67. A pedal force applied to the crank pedal 79 is transmitted to the crankshaft 83 and input to an endless chain 82 via a drive sprocket 80 (see Fig. 4). The chain 82 is wound around the driving sprocket 80 and a driven sprocket 81 provided on an axle of the rear wheel 78.

Referring also to Fig. 4, the power unit 20 is configured such that a motor M and the crankshaft 83 are integrated into a unit, and can be retrofitted around the support pipe 66 of the bicycle frame 67. That is, the power unit 20 and the battery unit 4 are disposed physically (spatially) apart from each other.

In the power unit 20, an output shaft 21 of the motor M and the crankshaft 83 are arranged in parallel inside a case 24. The crankshaft 83 is rotatably supported inside a sleeve 26 having a cylindrical shape via a first one-way clutch 28, and a driven gear 26a that meshes with a motor output gear 21a provided on the output shaft 21 of the motor M and the driving sprocket 80 are fixed to an outer peripheral side of the sleeve 26. Therefore, torque of the motor M is transmitted to the drive sprocket 80 via the motor output gear 21a, the driven gear 26a, and the sleeve 26. That is, the motor M is provided in parallel with the crank pedal 79.

A second one-way clutch 29 is provided between the driven sprocket 81 and the rear wheel 78.

In the electric bicycle 10 configured as such, when the crank pedal 79 is pedaled in a forward direction (also referred to as a forward rotation direction), the first one-way clutch 28 is engaged, and a forward rotational power of the crankshaft 83 is transmitted to the drive sprocket 80 via the sleeve 26, and further transmitted to the driven sprocket 81 via the chain 82. Here, the second one-way clutch 29 is also engaged, so that the forward rotational power transmitted to the driven sprocket 81 is transmitted to the rear wheel 78.

On the other hand, when the crank pedal 79 is pedaled in a reverse direction (also referred to as a reverse rotation direction), the first one-way clutch 28 does not engage, and a reverse rotational power of the crankshaft 83 is not transmitted to the sleeve 26, causing the crankshaft 83 to idle.

When a forward rotational power in the forward direction (forward rotation direction) is input from the rear wheel 78, such as when pushing the electric bicycle 10 forward, the second one-way clutch 29 does not engage, and the forward rotational power of the rear wheel 78 is not transmitted to the driven sprocket 81. Therefore, the rear wheel 78 rotates relative to the driven sprocket 81. On the other hand, when a reverse rotational power in a rearward direction (reverse rotation direction) is input from the rear wheel 78, such as when pushing the electric bicycle 10 in the rearward direction, the second one-way clutch 29 is engaged and the reverse rotational power of the rear wheel 78 is transmitted to the driven sprocket 81 and further transmitted to the drive sprocket 80 via the chain 82. Since the first one-way clutch 28 is also engaged here, the reverse rotational power transmitted to the drive sprocket 80 is transmitted to the crankshaft 83 and crank pedal 79, causing the crankshaft 83 and crank pedal 79 to rotate in reverse.

The power unit 20 is provided with a motor rotation speed sensor SE1 that detects the rotation speed of the motor M. The sleeve 26 is provided with a torque sensor SE2 that detects a torque value generated by a force with which a driver depresses the crank pedal 79 (hereinafter referred to as a pedal depressing force). The motor rotation speed sensor SE1 is composed of a magnet and a Hall IC provided on an outer periphery of the output shaft 21 of the motor M. The torque sensor SE2 is composed of a magnetostrictive torque sensor disposed on an outer periphery of the sleeve 26. The rear fork 70 is provided with a rear wheel rotation speed sensor SE3 that obtains the rotation speed of the rear wheel 78. The power unit 20 is provided with a current sensor and a voltage sensor (not illustrated).

A control circuit 40 that controls the power unit 20 is activated by the user operating an application on the mobile terminal 8. The control circuit 40 calculates the force with which the driver depresses the crank pedal 79 (hereinafter referred to as a pedal depressing force) from the torque value that is an output value of the torque sensor SE2, and then the control circuit 40 performs PWM control on the motor M so that an assist force determined by the pedal depressing force and an assist ratio according to the vehicle speed of the electric bicycle 10 is generated.

In electric bicycles of the related art, the control circuit has generally been incorporated into the electric assist unit. However, in the electric bicycle 10 of the embodiment, the control circuit 40 is physically (spatially) separated from the power unit 20 and is incorporated inside the battery unit 4, more specifically inside the pedestal 3. Although the details will be described below, the pedestal 3 has a first space SP1 therein, and a second space SP2 that is disposed on an opposite side of the battery 2 with respect to the first space SP1 and is formed to have liquid tightness with respect to the first space SP1. Liquid tightness refers to the property that liquid does not infiltrate from the outside into a sealed space.

Fig. 5 is a diagram illustrating electrical paths and communication paths of the power unit 20, the battery 2, and the control circuit 40 in the electric bicycle 10.

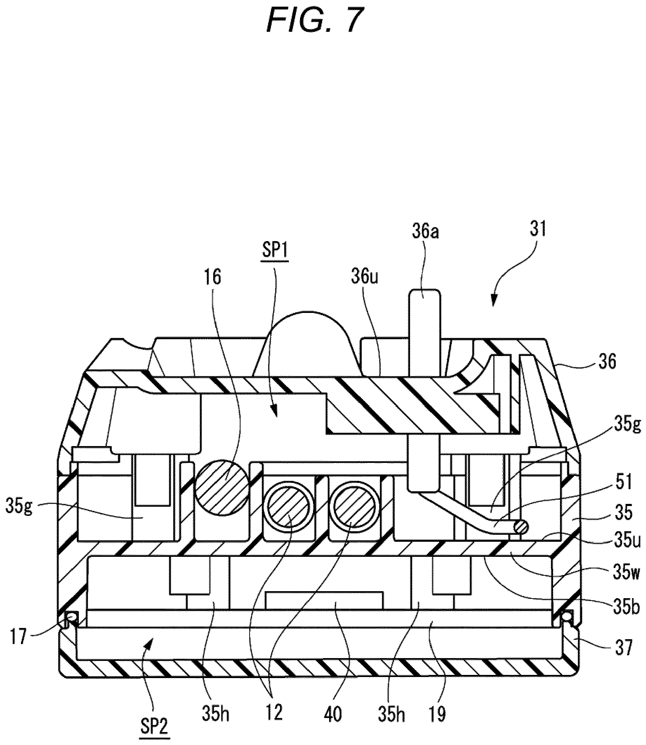

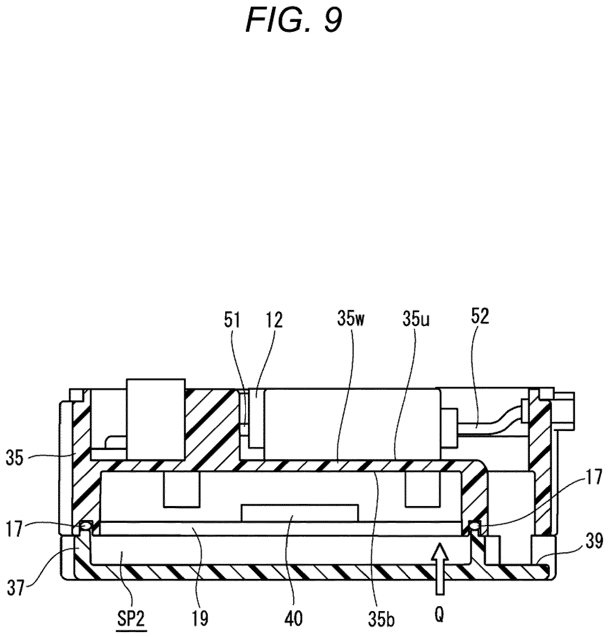

In the second space SP2 of the pedestal 3, a control circuit 40 (PROCESSOR in the drawing), a converter DC/DC, an inertial measurement unit IMU, an atmospheric pressure sensor 41, a global navigation satellite system (GNSS) unit 43, a memory 42, and a Bluetooth low energy (BLE) unit 44 are disposed. The electronic components are mounted (fixed) on a circuit board 19 (see Figs. 7 and 9).

The control circuit 40 calculates the torque generated from the motor M of the power unit 20 so that the assist force determined by the pedal depressing force and the assist ratio according to the vehicle speed of the electric bicycle 10 is generated as described above. As a result, the motor M operates according to a calculation result (drive request) from the control circuit 40. The converter DC/DC steps down the supplied DC voltage as direct current to generate a power supply voltage for the control circuit 40, the inertial measurement unit IMU, the atmospheric pressure sensor 41, the GNSS unit 43, the memory 42, and the BLE unit 44. In Fig. 5, power lines connecting the converter DC/DC to the inertial measurement device IMU, the atmospheric pressure sensor 41, the GNSS unit 43, the memory 42, and the BLE unit 44 are omitted.

The inertial measurement device IMU is, for example, a 9-axis sensor that has the functions of a 3-axis acceleration sensor, a 3-axis angular velocity sensor, and a 3-axis orientation sensor, and detects the mounting attitude of the control circuit 40. The atmospheric pressure sensor 41 detects atmospheric pressure. The GNSS unit 43 acquires position information of the electric bicycle 10. The memory is, for example, an SD card, and temporarily or permanently stores information, travel data, and the like of the electric bicycle 10. The BLE unit 44 is a communication device for communicating with the user's mobile terminal 8. The control circuit 40 and the like are disposed in a second space SP2 that is formed in a liquid-tight manner, and water infiltration is avoided even in stormy weather.

In the first space SP1 of the pedestal 3, male terminals 36a (plugs) electrically connected to female terminals (receptacles) 11 provided on the battery 2, a plug receptacle pair 12 connected to the male terminals 36a via power lines 51, an electrical connector pair 13 electrically connected to the control circuit 40 via power lines 52 and the converter DC/DC, a communication connector pair 14 electrically connected to the control circuit 40 via a communication line 53, and a communication connector pair 15 communicably connected to the control circuit 40 via a communication line 54 are provided.

The plug receptacle pair 12 is detachable from each other, and is connected to the battery 2 via the power lines 51 and the male terminals 36a, as well as to the power unit 20 via power lines 55. The electrical connector pair 13 is connected to the converter DC/DC via the power lines 52 and to the power unit 20 via power lines 56. The power lines 56 are configured to be supplied with power from the battery 2 by branching from the power lines 55 or the like. The communication connector pair 14 is connected to the control circuit 40 via the communication line 53 and to the power unit 20 via a communication line 57. The communication connector pair 15 is connected to the control circuit 40 via the communication line 54 and to the power unit 20 via a communication line 58. A communication method via the communication lines 54 and 58 is not particularly limited, and is, for example, universal asynchronous receiver transmitter (UART) communication.

The electrical connector pair 13, the communication connector pair 14, and the communication connector pair 15 configure the same connector pair 16. The power lines 52, the communication line 53, and the communication line 54 configure a first harness 59, and the power lines 56, the communication line 57, and the communication line 58 configure a second harness 60. As described above, since the connector pairs are integrated by the connector pair 16, and the power lines and the communication lines are bundled and routed as one, assembly work can be facilitated.

In the electrical system and communication system configured as such, power from the battery 2 is supplied to the motor M of the power unit 20, and the power stepped down from the power unit 20 via the converter DC/DC is supplied to the control circuit 40, the inertial measurement unit IMU, the atmospheric pressure sensor 41, the GNSS unit 43, the memory, and the BLE unit 44. The control circuit 40 receives the power before being stepped down by the converter DC/DC via a power branch line 52a, and outputs a power switch signal to the power unit 20 via the communication lines 53 and 57. When power is supplied to the control circuit 40 and the user requests activation of the power unit 20 via the application on the mobile terminal 8, a power switch signal is transmitted to the power unit 20 via the communication lines 53 and 57, and the power unit 20 is activated. When the power unit 20 is activated, information is exchanged between the power unit 20 and the control circuit 40 via the communication lines 54 and 58, and information can be exchanged with the user's mobile terminal via the BLE unit 44.

### [Battery Unit]

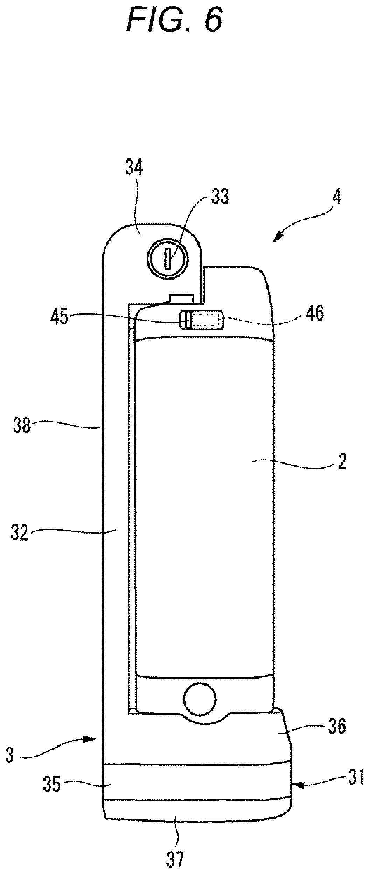

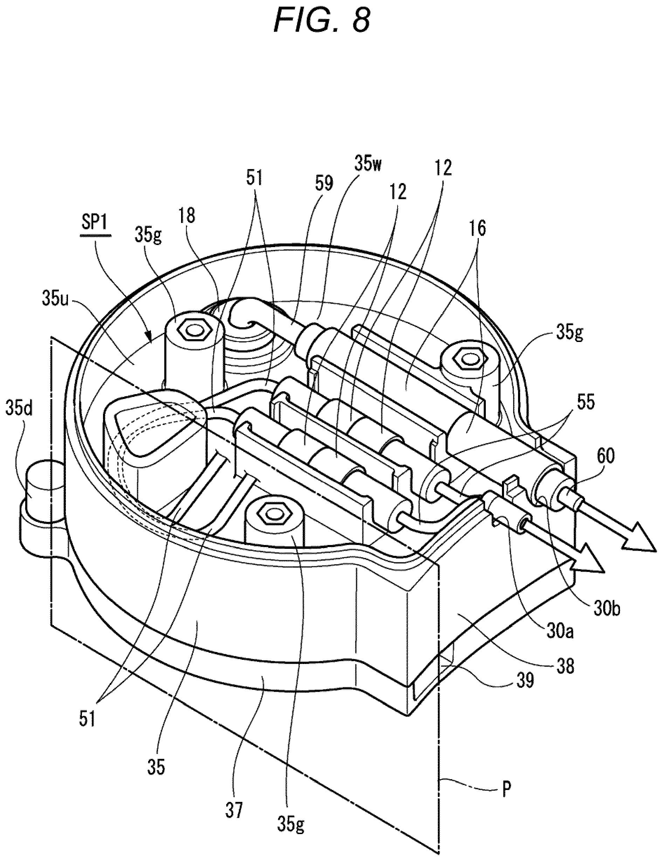

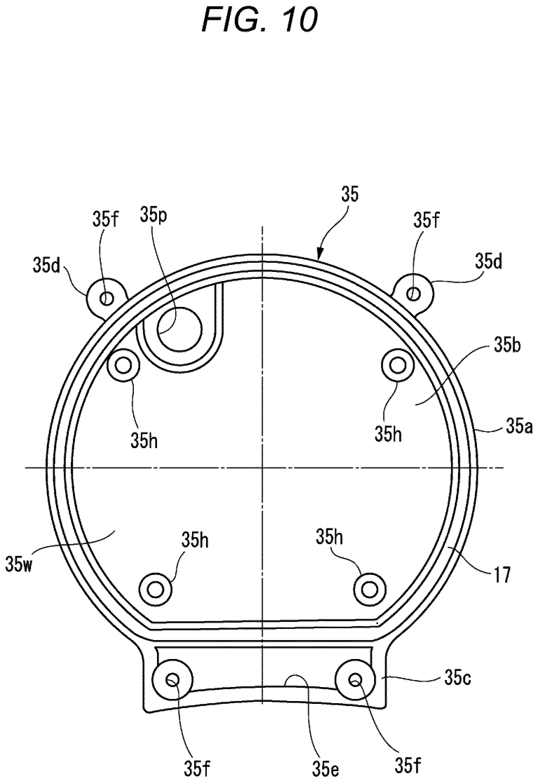

Next, the configuration of the battery unit 4 will be described in detail. Fig. 6 is a side view of the battery unit 4. Fig. 7 is a cross-sectional view of the pedestal 3 of the first embodiment of the battery unit 4. Fig. 8 is a perspective view of the first space SP1 of the pedestal 3 of the first embodiment. Fig. 9 is a cross-sectional view taken along a plane P in Fig. 8. Fig. 10 is a bottom view of a base body 35 viewed from a direction of an arrow Q in Fig. 9.

As illustrated in Fig. 6, the battery unit 4 includes the pedestal 3 attached to the seat post 71, and the battery 2 that is detachably attached to the pedestal 3 and includes a plurality of cells inside. The battery 2 includes a charging port (receptacle) 46 covered by a cover 45 that can be opened and closed on the outer peripheral surface. By connecting a charging terminal (not illustrated) to the charging port 46, power can be supplied to an external device (for example, the mobile terminal 8).

### [Pedestal]

### (First Embodiment)

The pedestal 3 includes a pedestal base 31 that comes into contact with a bottom surface of the battery 2, a pedestal plate 32 that has a plate shape and extends along the down pipe 69, a locking mechanism 33 capable of locking the pedestal 3 and the battery 2, and a pedestal upper portion 34 accommodating the locking mechanism 33 and provided on an upper part of the pedestal plate 32.

As illustrated in Fig. 7, the pedestal base 31 includes the base body 35 having a partition wall 35w that partitions the first space SP1 and the second space SP2, an upper case 36 located above the base body 35 and forming the first space SP1 between the upper case 36 and the base body 35, and a bottom case 37 located below the base body 35 and forming the second space SP2 between the bottom case 37 and the base body 35. In other words, the base body 35 is provided to form a space on the second space SP2 side of the first space SP1, and the upper case 36 is provided to form a space on an anti-second space SP2 side of the first space SP1. The anti-second space SP2 side means the side opposite to the second space SP2. The base body 35 and the upper case 36 are provided to form the first space SP1 side of the second space SP2, and the bottom case 37 is provided to form an anti-first space SP1 side of the second space SP2. The anti-first space SP1 side means the side opposite to the first space SP1.

As illustrated in Fig. 10, the base body 35 includes a body portion 35a having an annular shape, an extending portion 35c having a substantially rectangular shape and provided in a part of a circumferential direction of the body portion 35a having an annular shape, and a pair of ear portions 35d provided on the side opposite to the extending portion 35c. The extending portion 35c is provided with a drain hole 35e that penetrates vertically and communicates with a drain hole 39 of the bottom case 37, which will be described below. A total of four first fixing portions 35f are provided on the pair of ear portions 35d and the extension portion 35c, and the bottom case 37 is detachably fixed to the base body 35 by a fastening member (tapping, bolt) (not illustrated) which is fixed to the first fixing portion 35f from below.

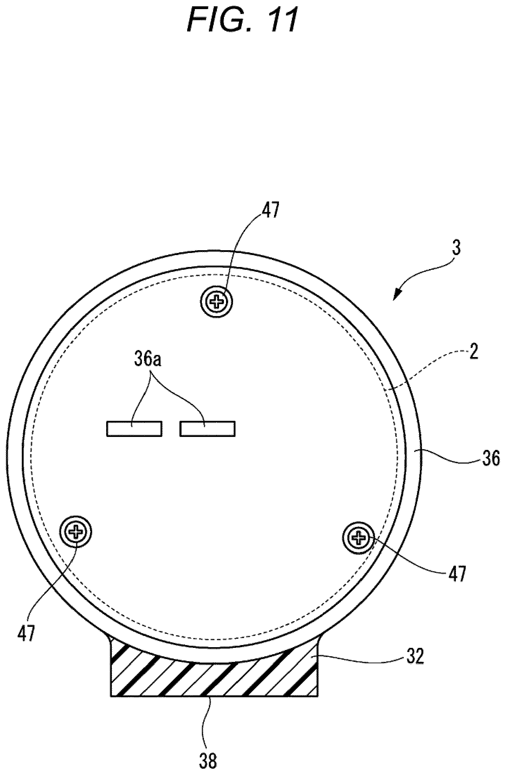

As illustrated in Fig. 8, three second fixing portions 35g having a columnar shape are provided at approximately 120° intervals on an upper surface 35u of the partition wall 35w of the body portion 35a. Referring also to Fig. 11, the upper case 36 is detachably fixed to the base body 35 by fastening a bolt 47 passing through the upper case 36 to the second fixing portion 35g. The bolt 47 is provided in a position hidden by the battery 2 attached to the pedestal 3. Therefore, removal of the upper case 36 is prohibited while the battery 2 is attached to the pedestal 3. The bolt 47 may be fastened from the first space SP1 side, and then, the bolt hole provided in the upper case 36 is provided in a position hidden by the battery 2 attached to the pedestal 3.

As illustrated in Fig. 10, four third fixing portions 35h having a columnar shape are provided at approximately 90° intervals on a back surface 35b of the partition wall 35w of the body portion 35a. Referring also to Fig. 7, the circuit board 19 on which the control circuit 40 and the like are mounted is fixed to the third fixing portion 35h by a fastening member (tapping, bolt) (not illustrated) to be suspended from the base body 35. The GNSS unit 43 (not illustrated) is disposed on the circuit board 19 to be located above the circuit board 19 in a vertical direction.

As illustrated in Figs. 7 and 9, the second space SP2 is maintained in a liquid-tight state by a seal member 17 having an annular shape and provided on an outer periphery of the back surface 35b of the base body 35. The first space SP1 communicates with the outside via the water draining hole 35e and the drain hole 39 provided in the bottom case 37, as illustrated in Fig. 8. The drain hole 39 is disposed on a fixing surface 38 of the pedestal 3 fixed to an upper surface of the down pipe 69. Thereby, it is possible to prevent dust and water from entering the first space SP1 from the drain hole 39. It is preferable that the down pipe 69 be provided with an annular projection around the fixing hole to which the pedestal 3 is attached. When there is no annular projection, drainage from the drain hole 39 is facilitated by interposing a collar therebetween. A diameter of the drain hole 39 is preferably 4 mm or more.

As illustrated in Fig. 7, the upper case 36 is provided with the male terminal 36a on an upper surface 36u, which is electrically connected to the female terminal 11 provided on a lower surface of the battery 2. The male terminal 36a extends through the upper surface 36u to the first space SP1, and is connected to the plug receptacle pair 12 provided in the first space SP1 via the power line 51. The male terminal 36a may not penetrate the upper surface 36u, and the power line 51 may penetrate the upper surface 36u and be connected to the male terminal 36a.

As illustrated in Figs. 7 and 8, the plug receptacle pair 12 of a positive electrode side, the plug receptacle pair 12 of a negative electrode side, and the connector pair 16 are arranged in parallel in the first space SP1. The power lines 51 connected to the male terminal 36a extend from one end sides of the plug receptacle pair 12 of the positive electrode side and the plug receptacle pair 12 of the negative electrode side. The first harness 59 extends from one end side of the connector pair 16 toward the second space SP2. That is, the power line 51 and the first harness 59 are also disposed in the first space SP1. Although the first harness 59 (power line 52, communication lines 53 and 54) and the connector pair 16 (electrical connector pair 13, communication connector pairs 14 and 15) do not necessarily have to go through the first space SP1, the liquid-tightness of the second space SP2 can be better maintained by using a wiring route that goes through the first space SP1.

Two power lines 55 and the second harness 60 extend toward the power unit 20 from the other ends of the plug receptacle pair 12 of the positive electrode side, the plug receptacle pair 12 of the negative electrode side, and the connector pair 16. The two power lines 55 extend toward the power unit 20 through a communication hole 30a that communicates the inside and outside of the first space SP1. The connector 16 on the motor M side of the connector pair 16 is disposed in a communication hole 30b, and the second harness 60 extends toward the power unit 20. The communication holes 30a and 30b are formed by the base body 35 and the upper case 36. The plug receptacle 12 on the motor M side of the plug receptacle pair 12 may be disposed in the communication hole 30a, and the power line 55 may extend toward the power unit 20. The second harness 60 may extend toward the power unit 20 through the communication hole 30b.

The first harness 59 extends to the second space SP2 through an insertion hole 35p (see Fig. 10) provided in the partition wall 35w of the base body 35. A grommet 18 is interposed between the first harness 59 and the insertion hole 35p, and the second space SP2 is maintained in a liquid-tight state with respect to the first space SP1. In Figs. 7 and 9, only the control circuit 40 is illustrated among the electronic components mounted on the circuit board 19, and the converter DC/DC, the inertial measurement unit IMU, the atmospheric pressure sensor 41, the GNSS unit 43, the memory, and the BLE unit 44 are not illustrated.

As described above, according to the embodiment, the control circuit 40 is disposed apart from the power unit 20, so that the power unit 20 can be supplied from a plurality of manufacturers. Since the control circuit 40 is disposed inside the battery unit 4, the internal space of the battery unit 4 can be effectively utilized. The control circuit 40 does not need to be disposed inside the battery unit 4, and may be disposed outside the battery unit 4 and adjacent to the battery unit 4.

In the embodiment, since the control circuit 40 is disposed inside the pedestal 3 that configures the battery unit 4, the internal space of the pedestal 3 to which the battery 2 is attached can be effectively utilized. The control circuit 40 does not need to be disposed inside the pedestal 3 configuring the battery unit 4, and may be disposed adjacent to the pedestal 3 outside the pedestal 3.

In the embodiment, a part of the male terminal 36a electrically connected to the female terminal 11 provided in the battery 2 is disposed in the first space SP1, and the control circuit 40 is disposed in the second space SP2. By separating the spaces in which the male terminal 36a and the control circuit 40 are disposed as such, the influence of noise on the control circuit 40 can be reduced.

In the embodiment, the control circuit 40 is disposed inside the pedestal 3 at a position opposite to the battery 2 with respect to the male terminal 36a, so that the distance between the female terminal 11 and the male terminal 36a can be shortened. The female terminal 11 and the male terminal 36a may be connected wirelessly. That is, the configuration may be such that power is supplied from the female terminal 11 provided in the battery 2 to the male terminal 36a by non-contact discharge. Even then, the short distance between the female terminal 11 and the male terminal 36a improves transmission efficiency.

In addition to the male terminal 36a, the plug receptacle pair 12, the electrical connector pair 13, the communication connector pair 14, and the communication connector pair 15 are also disposed in the first space SP1. By consolidating the connector pairs 12 to 15 in the first space SP1 as such, wiring connection work becomes easier.

In the embodiment, the electrical connector pair 13, the communication connector pair 14, and the communication connector pair 15 are accommodated in the same connector pair 16, making the wiring connection work further easier.

In the embodiment, the first space SP1 communicates with the drain hole 39 that opens to the outside, so that water or the like that enters the first space SP1 can be drained. Therefore, it is possible to prevent the plug receptacle pair 12 or the like from being exposed to water.

In the embodiment, the control circuit 40 is disposed inside the pedestal 3 configuring the battery unit 4, and at least a part of the control circuit 40 is disposed at a position overlapping the down pipe 69 when viewed from below. Thereby, the down pipe 69 can protect the control circuit 40 from impacts from below due to flying stones or the like. It is preferable that the control circuit 40 be disposed at a position higher than an upper end of the power unit 20 in the vertical direction. Accordingly, the control circuit 40 can be protected.

### (Second Embodiment)

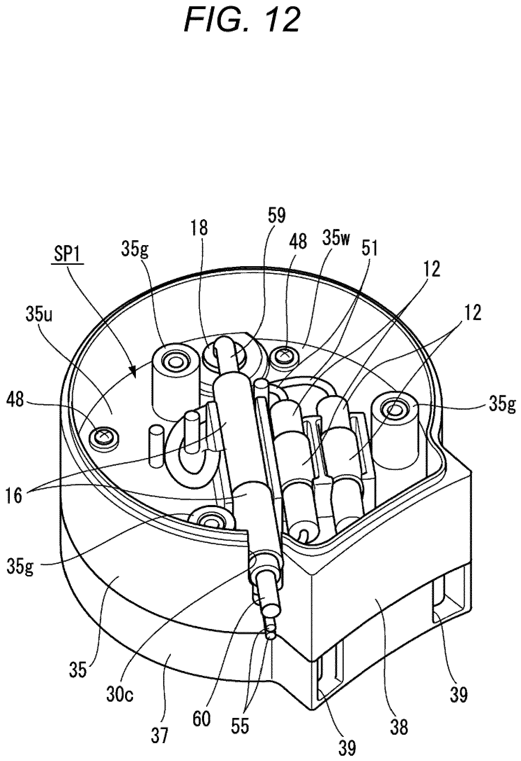

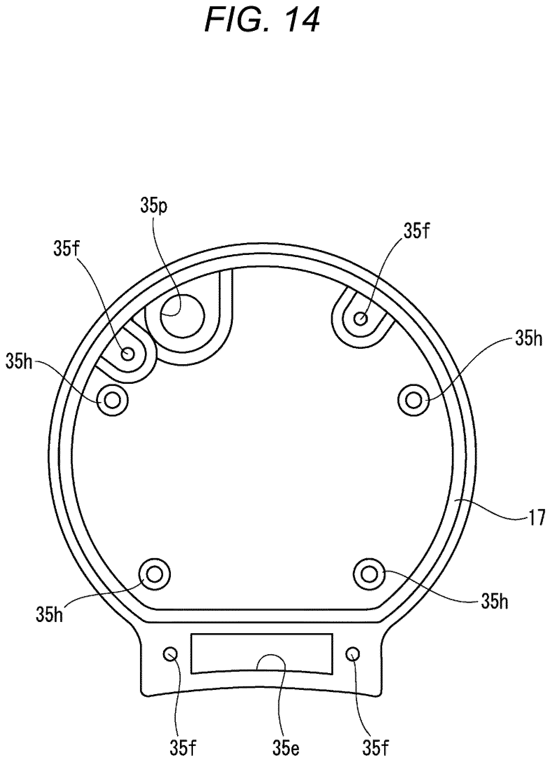

Next, the pedestal 3 of a second embodiment will be described with reference to Figs. 12 to 14. In the following description, differences from the first embodiment will be mainly described, and descriptions of the similar components will be simplified or omitted.

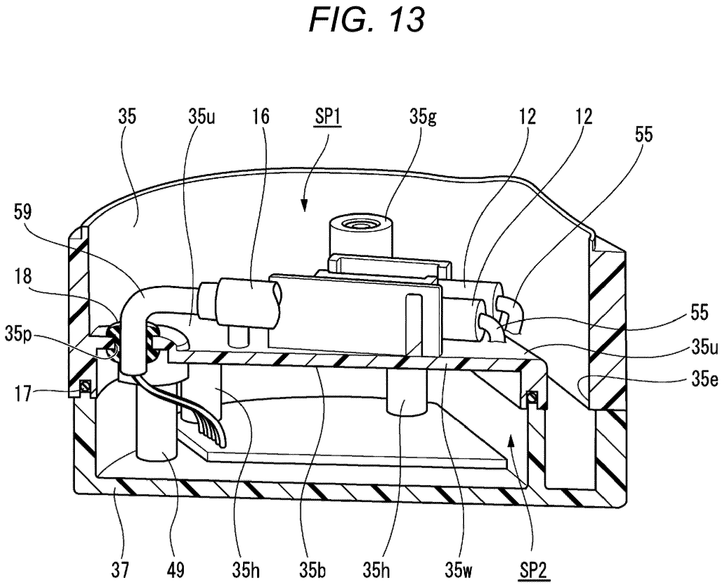

In the pedestal 3 of the second embodiment, the ear portion 35d is not provided in the base body 35, and a total of four first fixing portions 35f are provided in the body portion 35a and the extending portion 35c. A bolt 48 fixed to the first fixing portion 35f is disposed in the first space SP1. That is, the bolt 48 is configured such that the bottom case 37 can be attached by the bolt 48 from the first space SP1 through the first fixing portion 35f, and the bolt 48 cannot be attached or removed from the outside. In Fig. 13, reference numeral 49 denotes a receiving portion that is provided upright on the bottom case 37 and has a female threaded portion into which the bolt 48 is screwed.

Since the bolt 48 is disposed in the first space SP1 as such, it is necessary to remove the upper case 36 from the base body 35 when removing the bottom case 37 from the base body 35. However, as described in the first embodiment, the bolts 47 for fixing the upper case 36 and the base body 35 are disposed in positions hidden by the battery 2 attached to the pedestal 3. The pedestal 3 and the battery 2 are configured to be lockable by the locking mechanism 33. Therefore, since a third party cannot easily access the first space SP1 and the second space SP2, mischief and unauthorized modification are prevented. The first space SP1 may be provided with a bolt hole into which the bolt 48 is screwed.

In the embodiment, as illustrated in Fig. 12, the two plug receptacle pairs 12 and the connector pair 16 are disposed in an inclined state with respect to the fixing surface 38 of the pedestal 3. Thereby, the space in the first space SP1 can be effectively utilized. The connector 16 on the motor M side and the two power lines 55 extending from two plug receptacle pairs 12 pass through one communication hole 30c, and the second harness 60 and the two power lines 55 extend toward the power unit 20.

The communication hole 30c is formed by the base body 35 and the upper case 36, which is similar to the first embodiment, but in the embodiment, the communication hole 30c is disposed at a different position from the fixing surface 38 of the pedestal 3 which is fixed to the upper surface of the down pipe 69. Specifically, the communication hole 30c is provided at a constriction on one side between the body portion 35a having an annular shape and the extending portion 35c having a substantially rectangular shape, and the connector 16 on the motor M side and the two power lines 55 are disposed vertically. As such, by disposing the communication hole 30c at a position that avoids the fixing surface 38, it is possible to avoid interference with the down pipe 69 by the wiring and the like passing through the communication hole.

In the embodiment, two drain holes 39 are provided in the bottom case 37. By disposing the drain holes 39 on both left and right sides of the fixing surface 38, drainage performance is improved. When only one drain hole 39 is provided, it is preferably provided at a position on the left side of the electric bicycle 10. Therefore, even when the electric bicycle 10 is supported on a side stand when the electric bicycle 10 is not in use, water can be drained from the first space SP1.

Although various embodiments are described above with reference to the drawings, it goes without saying that the present invention is not limited to such examples. It is clear that those skilled in the art can come up with various changes or modifications within the scope of the claims, and it is understood that such changes or modifications also naturally fall within the technical scope of the present invention. Each of the components in the above embodiments may be freely combined without departing from the spirit of the invention.

The electric bicycle 10 may be a road bike, a mountain bike, a cross bike, a city cycle, a folding bicycle, or the like, and the type thereof is not limited. The pedestal 3 of the battery unit 4 is not limited to the upper surface of the down pipe 69, but may be fixed at any position such as a lower surface of the down pipe 69, a front surface of the seat post 71, a rear surface of the seat post 71, and the like. For example, in the case of a road bike, a mountain bike, a cross bike, or the like, the pedestal 3 may be fixed to an upper surface of a top pipe that connects a head pipe and a seat post above a down pipe, or to a lower surface of the top pipe.

In the electric bicycle 10 in which a body (cover, cowl) is attached to a frame, the pedestal 3 of the battery unit 4 may be fixed to the body.

In the above-described embodiments, a case is described in which an electric assist unit is retrofitted to a non-electric bicycle after being sold. However, the present invention is not necessarily limited to non-electric bicycles after being sold, but can also be applied to completed bicycles configured by new non-electric bicycles that have been fitted with an electric assist unit at factories or retailers.

In the embodiments described above, the power unit 20 drives the rear wheel 78, but the power unit 20 may drive the front wheel 73.

The power unit 20 is not limited to the embodiments described above, and may have a simple configuration in which the motor M is accommodated in the case 24, for example.

The electrical paths and communication paths of the power unit 20, the battery 2, and the control circuit 40 illustrated in Fig. 5 are not limited thereto. In the embodiments described above, the power from the battery 2 supplied to the converter DC/DC is supplied via the power unit 20 through the power line 56, the electrical connector pair 13, and the power line 52. However, the power may be supplied from the battery 2 to the converter DC/DC without passing through the power unit 20.

The power unit 20 may also include a processor (microcomputer, motor ECU) as an electric motor control unit, and may control the motor M by communicating with the control circuit 40 via the communication lines 54 and 58 and receiving requests, commands, and the like calculated by the control circuit 40. The protection of the motor M may be independently controlled by the processor without receiving requests or instructions from the control circuit 40.

Among the control circuit 40, the converter DC/DC, the inertial measurement unit IMU, the atmospheric pressure sensor 41, the GNSS unit 43, the memory 42, and the BLE unit 44 provided in the pedestal 3, the components other than the control circuit 40, the GNSS unit 43, and the BLE unit 44 may be provided in the power unit 20.

The specification describes at least the following matters. Although components corresponding to those in the above-described embodiments are shown in parentheses, the present invention is not limited thereto.
(1) A vehicle (electric bicycle 10) that includes:
   a wheel (rear wheel 78);
   an electric motor (power unit 20) configured to drive the wheel;
   a power storage device (battery unit 4) electrically connected to the electric motor; and
   an arithmetic device (control circuit 40) configured to calculate a command value or a request value that correlates to power generated from the electric motor, where
   the electric motor and the power storage device are disposed apart from each other, and
   the arithmetic device is disposed inside the power storage device or adjacent to the power storage device while being apart from the electric motor.

According to (1), since it is only necessary to configure the electric motor to operate according to calculation results transmitted from the arithmetic device, it becomes easy to receive supplies of electric motors from a plurality of manufacturers or the like. The arithmetic device can be disposed by effectively utilizing the internal space or the adjacent space of the power storage device.

"Power" may be torque or output, and may also be a current command, or a current request. "Power" is a concept that includes regenerative power that is negative power in a rotation direction, and reverse power-run power (vehicle rearward movement) that is positive power in a reverse rotation direction in addition to power-run power that is positive power in a forward rotation direction.

The arithmetic device needs to calculate at least "a command value or a request value that correlates to power generated from the electric motor". The arithmetic device may calculate an output limit value of the motor or an output limit value of the battery, or may perform calculations for control based on the output limit value.

(2) The vehicle according to (1), where
the power storage device includes,
   an attachment unit (pedestal 3) fixed to a vehicle body (body) or frame portion (down pipe 69) of the vehicle, and
   a power storage unit (battery 2) that is detachably attached to the attachment unit and includes a power storage element therein, and
the arithmetic device is disposed inside the attachment unit or adjacent to the attachment unit.

According to (2), the arithmetic device can be disposed by effectively utilizing the internal space or adjacent space of the attachment unit of the power storage device to which the power storage unit is attached.

(3) The vehicle according to (2), where
the arithmetic device is disposed inside the attachment unit,
the attachment unit includes a second electrical connector (male terminal 36a) electrically connected to a first electrical connector (female terminal 11) that is provided in the power storage unit, and
the arithmetic device is disposed at a position opposite to the power storage unit with respect to the second electrical connector and inside the attachment unit.

According to (3), since the distance between the first electrical connector and the second electrical connector can be shortened, the transmission efficiency is improved, for example, when the first electrical connector and the second electrical connector are connected wirelessly.

(4) The vehicle according to (3), where
the attachment unit includes,
   a first space (first space SP1) in which the second electrical connector or a power line (power line 51) connected to the second electrical connector is disposed, and
   a second space (second space SP2) partitioned from the first space and formed to have liquid-tightness, and
the arithmetic device is disposed in the second space.

According to (4), since the spaces in which the second electrical connector and the arithmetic device are disposed are separated, the influence of noise on the arithmetic device can be reduced.

(5) The vehicle according to (4), where
the attachment unit includes,
a first portion (base body 35, upper case 36) provided to form a space on a near side to the first space of the second space, and
a second portion (bottom case 37) detachably fixed to the first portion and provided to form a space on a far side from first space of the second space.

According to (5), access to the second space becomes easy.

(6) The vehicle according to (5), where
the arithmetic device is fixed to and disposed in the first portion.

According to (6), the impact on the arithmetic device can be reduced.

(7) The vehicle according to (5) or (6), where
a fixture (bolt 48) that fixes the first portion and the second portion, or an insertion hole (bolt hole) into which the fixture is inserted, is disposed in the first space.

According to (7), since the fixture cannot be removed from the outside, mischief and unauthorized modification are prevented.

(8) The vehicle according to any one of (4) to (7), where
the attachment unit includes,
a third portion (base body 35) provided to form a space on a near side to the second space of the first space, and
a fourth portion (upper case 36) detachably fixed to the third portion and provided to form a space on a far side from the second space of the first space.

According to (8), access to the first space becomes easy.

(9) The vehicle according to (8), where
another fixture (bolt 47) that fixes the third portion and the fourth portion, or another insertion hole (bolt hole) into which the another fixture is inserted, is disposed in a position hidden by the power storage unit attached to the attachment unit.

According to (9), removal of the fourth portion is prohibited while the power storage unit is attached to the attachment unit.

(10) The vehicle according to (9), where
the power storage device includes a lock portion (locking mechanism 33) configured to lock the attachment unit and the power storage unit.

According to (10), it is possible to prevent the power storage unit from being removed from the attachment unit.

(11) The vehicle according to any one of (4) to (10), where
the power line is electrically connected to the electric motor and includes an electrical connector pair (plug receptacle pair 12) that is attachable and detachable from each other, and
the electrical connector pair is disposed in the first space.

According to (11), the electrical connector pair can be protected.

(12) The vehicle according to any one of (4) to (11), further including:
a communication line (communication line 54) communicably connecting the arithmetic device and the electric motor or an electric motor control unit (motor ECU, inverter) that controls the electric motor, where
the communication line is disposed in the first space.

According to (12), although it is not necessary for the communication line connecting the arithmetic device and the electric motor to go through the first space, the liquid-tightness of the second space can be further maintained by using a wiring route that goes through the first space.

(13) The vehicle according to (12), where
the communication line includes a communication connector pair (communication connector pair 15) that is attachable and detachable from each other, and
the communication connector pair is disposed in the first space.

According to (13), although it is not necessary to go through the first space for the communication connector pair, it is possible to further maintain the liquid tightness of the second space by setting the wiring route to go through the first space.

(14) The vehicle according to (12) or (13), where
the attachment unit has a partition wall (partition wall 35w) that partitions the first space and the second space, and
the partition wall has an insertion hole (insertion hole 35p) through which the communication line is inserted, and a sealing portion (grommet 18) interposed between the insertion hole and the communication line.

According to (14), the liquid tightness of the second space can be ensured.

(15) The vehicle according to any one of (12) to (14), further including:
another power line (power line 52) electrically connecting the arithmetic device and the electric motor, where
the another power line and the communication line are bundled and routed integrally.

According to (15), assembly work can be facilitated.

(16) The vehicle according to (15), where
the communication line includes a communication connector pair (communication connector pair 15) that is attachable and detachable from each other,
the another power line includes another power connector pair (electrical connector pair 13) that is attachable and detachable from each other, and
the communication connector pair and the another power connector pair are provided to be integrated when attached.

According to (16), assembly work can be facilitated.

(17) The vehicle according to (16) as dependent on (11), where
the attachment unit is provided with a communication hole (communication hole 30a, 30b, 30c) communicating inside and outside of the first space, and
at least one of
   an electrical connector (plug receptacle 12 on electric motor side) of the electrical connector pair on a near side to the electric motor, or a power line part (power line 55) of the power line that is nearer to the electric motor than the electrical connector pair, and
   a communication connector (connector 16 on motor M side) of the communication connector pair on a near side to the electric motor or the electric motor control unit, or a communication line part (second harness 60) of the communication line that is nearer to the electric motor or the electric motor control unit than the communication connector pair
is disposed in the communication hole.

According to (17), the first space communicates with the outside through the communication hole.

(18) The vehicle according to (17), where
the communication hole is disposed at a position away from a fixing surface of the attachment unit that is fixed to the vehicle body or the frame portion.

According to (18), it is possible to avoid interference of the wiring or the like passing through the communication hole with the vehicle body or the frame portion.

(19) The vehicle according to any one of (4) to (18), where
the attachment unit includes another communication hole (drain hole 39) communicating inside and outside of the first space, and
the another communication hole is disposed on a fixing surface (fixing surface 38) of the attachment unit that is fixed to the vehicle body or the frame portion.

According to (19), it is possible to prevent dust and water from entering the first space from the other communication hole.

(20) The vehicle according to any one of (2) to (19), where
the arithmetic device is fixed to a substrate (circuit board 19), and
the substrate is fixed to the attachment unit.

According to (20), the arithmetic device can be protected.

(21) The vehicle according to (20), further including:
a receiver (GNSS unit 43) of a satellite positioning system, where
the receiver is fixed to the substrate, and
the substrate is disposed such that the receiver is located higher than the substrate in a vertical direction.

According to (21), it is possible to protect the receiver of the satellite positioning system while preventing a decline in reception capability.

(22) The vehicle according to (20) or (21), further including:
a communication portion (BLE unit 44) capable of wirelessly communicating with a terminal that is attached to the vehicle or carried by a passenger of the vehicle, where
the communication portion is fixed to the substrate.

According to (22), the communication portion can be protected.

(23) The vehicle according to any one of (1) to (22), where
the electric motor is accommodated in a casing (case 24) together with a power transmission portion (motor output gear 21a, driven gear 26a) mechanically connected to the electric motor, and
the arithmetic device is disposed inside the power storage device or adjacent to the power storage device while being apart from the casing.

According to (23), it becomes easy to receive supplies of power units in which an electric motor and a power transmission portion are integrated from a plurality of manufacturers.

(24) The vehicle according to any one of (1) to (23), where
at least a part of the arithmetic device is disposed at a position overlapping a frame portion (down pipe 69) of the vehicle when viewed from a vertically downward side.

According to (24), the frame portion of the vehicle can protect the arithmetic device from impacts from below caused by flying stones or the like.

(25) The vehicle according to any one of (1) to (24), where
the arithmetic device is disposed at a position higher than an upper end of the electric motor in a vertical direction.

According to (25), the arithmetic device can be protected by the electric motor.

The application is based on a Japanese patent application (Japanese Patent Application No. 2021 - 142751) filed on September 1, 2021, the contents of which are incorporated herein as a reference.

### REFERENCE SIGNS LIST

2: battery (power storage unit)
3: pedestal (attachment unit)
4: battery unit (power storage device)
10: electric bicycle (vehicle)
11: female terminal (first electrical connector)
12: plug receptacle, plug receptacle pair (electrical connector, electrical connector pair)
13: electrical connector, electrical connector pair (another electrical connector, another power connector pair)
15: communication connector, communication connector pair
16: connector (connection member)
18: grommet (sealing portion)
19: circuit board (substrate)
20: power unit (electric motor)
21a: motor output gear (power transmission portion)
24: case (casing)
26a: driven gear (power transmission portion)
30a: communication hole
30b: communication hole
30c: communication hole
33: locking mechanism (lock portion)
35: base body (third portion)
35p: insertion hole (insertion hole)
35w: partition wall
36: upper case (fourth portion)
36a: male terminal (second electrical connector)
37: bottom case (second portion)
38: fixing surface
39: drain hole (communicating hole)
40: control circuit (arithmetic device)
43: GNSS unit (receiver)
44: BLE unit (communication portion)
47: bolt (fixture)
48: bolt (fixture)
51: power line
52: power line (another power line)
54: communication line
55: power line (power line part)
60: second harness (communication line part)
69: down pipe (frame portion)
78: rear wheel (wheel)
SP1: first space
SP2: second space

## Claims

1. A vehicle comprising:
a wheel;
an electric motor configured to drive the wheel;
a power storage device electrically connected to the electric motor; and
an arithmetic device configured to calculate a command value or a request value that correlates to power generated from the electric motor, wherein
the electric motor and the power storage device are disposed apart from each other, and
the arithmetic device is disposed inside the power storage device or adjacent to the power storage device while being apart from the electric motor.

2. The vehicle according to claim 1, wherein
the power storage device includes,
an attachment unit fixed to a vehicle body or frame portion of the vehicle, and
a power storage unit that is detachably attached to the attachment unit and includes a power storage element therein, and
the arithmetic device is disposed inside the attachment unit or adjacent to the attachment unit.

3. The vehicle according to claim 2, wherein
the arithmetic device is disposed inside the attachment unit,
the attachment unit includes a second electrical connector electrically connected to a first electrical connector that is provided in the power storage unit, and
the arithmetic device is disposed at a position opposite to the power storage unit with respect to the second electrical connector and inside the attachment unit.

4. The vehicle according to claim 3, wherein
the attachment unit includes,
a first space in which the second electrical connector or a power line connected to the second electrical connector is disposed, and
a second space partitioned from the first space and formed to have liquid-tightness, and
the arithmetic device is disposed in the second space.

5. The vehicle according to claim 4, wherein
the attachment unit includes,
a first portion provided to form a space on a near side to the first space of the second space, and
a second portion detachably fixed to the first portion and provided to form a space on a far side from the first space of the second space.

6. The vehicle according to claim 5, wherein
the arithmetic device is fixed to and disposed in the first portion.

7. The vehicle according to claim 5 or 6, wherein
a fixture that fixes the first portion and the second portion, or an insertion hole into which the fixture is inserted, is disposed in the first space.

8. The vehicle according to any one of claims 4 to 7, wherein
the attachment unit includes,
a third portion provided to form a space on a near side to the second space of the first space, and
a fourth portion detachably fixed to the third portion and provided to form a space on a far side from the second space of the first space.

9. The vehicle according to claim 8, wherein
another fixture that fixes the third portion and the fourth portion, or another insertion hole into which the another fixture is inserted, is disposed in a position hidden by the power storage unit attached to the attachment unit.

10. The vehicle according to claim 9, wherein
the power storage device includes a lock portion configured to lock the attachment unit and the power storage unit.

11. The vehicle according to any one of claims 4 to 10, wherein
the power line is electrically connected to the electric motor and includes an electrical connector pair that is attachable and detachable from each other, and
the electrical connector pair is disposed in the first space.

12. The vehicle according to any one of claims 4 to 11, further comprising:
a communication line communicably connecting the arithmetic device and the electric motor or an electric motor control unit that controls the electric motor, wherein
the communication line is disposed in the first space.

13. The vehicle according to claim 12, wherein
the communication line includes a communication connector pair that is attachable and detachable from each other, and
the communication connector pair is disposed in the first space.

14. The vehicle according to claim 12 or 13, wherein
the attachment unit has a partition wall that partitions the first space and the second space, and
the partition wall has an insertion hole through which the communication line is inserted, and a sealing portion interposed between the insertion hole and the communication line.

15. The vehicle according to any one of claims 12 to 14, further comprising:
another power line electrically connecting the arithmetic device and the electric motor, wherein
the another power line and the communication line are bundled and routed integrally.

16. The vehicle according to claim 15, wherein
the communication line includes a communication connector pair that is attachable and detachable from each other,
the another power line includes another power connector pair that is attachable and detachable from each other, and
the communication connector pair and the another power connector pair are provided to be integrated when attached.

17. The vehicle according to claim 16 as dependent on claim 11, wherein
the attachment unit is provided with a communication hole communicating inside and outside of the first space, and
at least one of
an electrical connector of the electrical connector pair on a near side to the electric motor, or a power line part of the power line that is nearer to the electric motor than the electrical connector pair, and
a communication connector of the communication connector pair on a near side to the electric motor or the electric motor control unit, or a communication line part of the communication line that is nearer to the electric motor or the electric motor control unit than the communication connector pair
is disposed in the communication hole.

18. The vehicle according to claim 17, wherein
the communication hole is disposed at a position away from a fixing surface of the attachment unit that is fixed to the vehicle body or the frame portion.

19. The vehicle according to any one of claims 4 to 18, wherein
the attachment unit includes another communication hole communicating inside and outside of the first space, and
the another communication hole is disposed on a fixing surface of the attachment unit that is fixed to the vehicle body or the frame portion.

20. The vehicle according to any one of claims 2 to 19, wherein
the arithmetic device is fixed to a substrate, and
the substrate is fixed to the attachment unit.

21. The vehicle according to claim 20, further comprising:
a receiver of a satellite positioning system, wherein
the receiver is fixed to the substrate, and
the substrate is disposed such that the receiver is located higher than the substrate in a vertical direction.

22. The vehicle according to claim 20 or 21, further comprising:
a communication portion capable of wirelessly communicating with a terminal that is attached to the vehicle or carried by a passenger of the vehicle, wherein
the communication portion is fixed to the substrate.

23. The vehicle according to any one of claims 1 to 22, wherein
the electric motor is accommodated in a casing together with a power transmission portion mechanically connected to the electric motor, and
the arithmetic device is disposed inside the power storage device or adjacent to the power storage device while being apart from the casing.

24. The vehicle according to any one of claims 1 to 23, wherein
at least a part of the arithmetic device is disposed at a position overlapping a frame portion of the vehicle when viewed from a vertically downward side.

25. The vehicle according to any one of claims 1 to 24, wherein
the arithmetic device is disposed at a position higher than an upper end of the electric motor in a vertical direction.
